# EUROPÄISCHE PATENTSCHRIFT

(11) **EP 4 088 918 B1**
(45) Veröffentlichungstag und Bekanntmachung des Hinweises auf die Patenterteilung: **14.02.2024**
(21) Anmeldenummer: 21208900.7
(22) Anmeldetag: 18.11.2021
(51) Int. Cl.: B29D 30/00, B29D 30/06, B60C 25/00, G01M 17/02, G01B 11/22, G01B 11/24

(54) **VERFAHREN ZUR BEARBEITUNG EINES REIFENS**
METHOD FOR PROCESSING A TYRE
PROCÉDÉ D'USINAGE D'UN PNEU

(30) Priorität: 14.05.2021 DE 102021204892
(43) Veröffentlichungstag der Anmeldung: 16.11.2022
(73) Patentinhaber: Continental Reifen Deutschland GmbH, 30165 Hannover (DE)
(72) Erfinder: Rudolph, Marco, 30165 Hannover (DE)
(74) Vertreter: Continental Corporation

(56) Entgegenhaltungen:
- DE-A1-102019 212 080
- DE-A1-102019 217 169
- JP-A- 2014 004 793

## Beschreibung

Die Erfindung betrifft ein Verfahren zur Bearbeitung eines Reifens, einen Reifen und eine Robotervorrichtung.

Die Erfindung geht aus von einem Verfahren zur Bearbeitung eines Reifens, aufweisend die folgenden Schritte:
- Bereitstellen eines Reifens, wobei der Reifen eine Reifenoberfläche aufweist, wobei die Reifenoberfläche mindestens einen Austrieb aufweist;
- Bereitstellen einer Bearbeitungsvorrichtung, wobei die Bearbeitungsvorrichtung zum Entfernen von Austrieben auf der Reifenoberfläche vorgesehen ist und wobei die Bearbeitungsvorrichtung eine Regelungskomponente aufweist, wobei mittels der Regelungskomponente die Entfernung der Austriebe mittels der Bearbeitungsvorrichtung in Abhängigkeit einer Information über einen Austrieb auf der Reifenoberfläche geregelt werden kann;
- Bereitstellen einer Vermessungsvorrichtung, wobei die Vermessungsvorrichtung zur Vermessung der Reifenoberfläche vorgesehen ist.

Aus dem Stand der Technik sind Verfahren zur Bearbeitung von Reifen bekannt. Beispielsweise wird in der DE102019 217169 A1 ein Verfahren zur Bearbeitung eines Reifens offenbart. Insbesondere ist es bekannt, Austriebe von Reifenoberflächen zu entfernen. Austriebe auf Reifenoberflächen werden beispielsweise während Vulkanisationsprozessen und Formgebungsprozessen von Reifen erzeugt. Im Vulkanisationsprozess entstehen beispielsweise an Segmentgrenzen der Vulkanisationsformen oder in einigen Entlüftungsbohrungen der Vulkanisationsform Austriebe auf der Reifenoberfläche. Die Austriebe sind aus dem Reifenkautschuk oder dem Reifengummimaterial ausgebildet und mit dem angrenzenden Gummimaterial oder Kautschukmaterial des Reifens verbunden. Die Austriebe können an verschiedenen Bereichen der Reifenoberfläche, beispielsweise an einem Laufstreifen des Reifens oder der Seitenwand des Reifens, entstehen.

Bei den aus dem Stand der Technik bekannten Verfahren zum Bearbeiten von Reifen wird beispielsweise ein menschlicher Bediener eingesetzt, der die Reifenoberfläche visuell inspiziert und prüft, ob und wo sich auf der der Reifenoberfläche Austriebe befinden. In Abhängigkeit dieser visuellen Inspektion wird die Entfernung des Austriebs mittels der Bearbeitungsvorrichtung vorgenommen.

Der Einsatz menschlicher Bediener für eine Bearbeitung des Reifens ist nicht optimal und kann im Vergleich zu einem vollständig automatisierten Verfahren zur Bearbeitung des Reifens langsamer und ungenauer erfolgen. Insbesondere muss beispielsweise für den Fall, wonach der Austrieb mittels einer Laservorrichtung entfernt werden soll, präzise der Ort oder die Position des Austriebs auf der Reifenoberfläche, sowie seine Abmessungen oder seine geometrische Form bestimmt werden. Auch für den Fall, wonach Austriebe zwischen Profilblöcken eines Laufstreifens des Reifens ausgebildet sind und diese Austriebe mittels einer Laservorrichtung entfernt werden sollen, ist eine präzise, rasche und zuverlässige Bestimmung des Orts oder der Position des Austriebs auf der Reifenoberfläche und eine präzise, rasche und zuverlässige Bestimmung der Abmessungen oder der Geometrie des Austriebs erforderlich. Die zuverlässige und genaue Bestimmung der Position, sowie der geometrischen Form oder der Abmessungen ist erforderlich, da beispielsweise im Fall einer Verwendung einer Laservorrichtung die Gefahr von Beschädigungen von Kautschukbereichen oder Gummimaterialbereichen des Reifens bestünde, die nicht zu dem Austrieb gehören.

Der Erfindung liegt somit die Aufgabe zu Grunde ein Verfahren bereitzustellen, bei dem die Bearbeitung des Reifens und insbesondere die Entfernung von Austrieben automatisch erfolgt oder automatisch erfolgen kann.

Gelöst wird die Aufgabe dadurch, dass das Verfahren durch den folgenden weiteren Schritt gekennzeichnet ist:
Vermessen der Reifenoberfläche mittels der Vermessungsvorrichtung, wobei mittels der Vermessungsvorrichtung der mindestens eine Austrieb vermessen wird und eine Information über den mindestens einen Austrieb erzeugt wird und wobei diese Information an die Regelungskomponente übertragbar ist.

Der mindestens eine Austrieb ist Bestandteil der Reifenoberfläche. Mittels des Vermessens der Reifenoberfläche kann somit auch der mindestens eine Austrieb vermessen werden. Mittels des Vermessens können beispielsweise ein Ort des mindestens einen Austriebs auf der Reifenoberfläche, eine geometrische Form des mindestens einen Austriebs und/oder Abmessungen des mindestens einen Austriebs bestimmt werden. Der Ort des mindestens einen Austriebs auf der Reifenoberfläche kann auch als die räumliche Position des mindestens einen Austriebs auf der Reifenoberfläche bezeichnet werden.

Die Vermessungsvorrichtung weist insbesondere eine computerimplementierte künstliche-Intelligenz-Komponente auf, mittels der beispielsweise ein Ort des mindestens einen Austriebs auf der Reifenoberfläche, eine geometrische Form des mindestens einen Austriebs und/oder Abmessungen des mindestens einen Austriebs bestimmt werden können. Die Vermessungsvorrichtung weist zusätzlich oder alternativ insbesondere eine computerimplementierte künstliche-neuronale-Netz-Komponente auf, mittels der beispielsweise ein Ort des mindestens einen Austriebs auf der Reifenoberfläche, eine geometrische Form des mindestens einen Austriebs und/oder Abmessungen des mindestens einen Austriebs bestimmt werden können. Die Vermessungsvorrichtung weist zusätzlich oder alternativ insbesondere eine computerimplementierte reinforcement-learning-Komponente auf, mittels der beispielsweise ein Ort des mindestens einen Austriebs auf der Reifenoberfläche, eine geometrische Form des mindestens einen Austriebs und/oder Abmessungen des mindestens einen Austriebs bestimmt werden können.

Die Information wird mittels der Vermessungsvorrichtung erzeugt und ist insbesondere elektromagnetisch, elektrisch oder elektronisch übertragbar. Die Information ist insbesondere auswertbar und speicherbar und insbesondere elektronisch, elektromagnetisch oder computergestützt auswertbar und speicherbar Durch den erfindungsgemäßen Umstand, wonach das Verfahren durch den folgenden weiteren Schritt gekennzeichnet ist:
- Vermessen der Reifenoberfläche mittels der Vermessungsvorrichtung, wobei mittels der Vermessungsvorrichtung der mindestens eine Austrieb vermessen wird und eine Information über den mindestens einen Austrieb erzeugt wird und wobei diese Information an die Regelungskomponente übertragbar ist;
wird auf Grund der übertragbaren und insbesondere elektronisch oder elektromagnetisch auswertbaren Information eine automatisierte Regelung des Verfahrens ermöglicht. Ferner wird eine Dokumentation von Prozessschritten oder Prozessstadien des Verfahrens möglich. Diese Dokumentation ist möglich, weil die Information insbesondere speicherbar ist. Das erfindungsgemäße Verfahren lässt sich zudem in einen kontinuierlichen Prozess des Verfahrens implementieren und nimmt somit keine eigene Zeit in Anspruch, die zu einer Verzögerung des Verfahrens führen könnte.

Somit wird ein verbessertes Verfahren zur Bearbeitung eines Reifens und insbesondere zum Entfernen von Austrieben bereitgestellt, bei dem eine automatisierte Regelung des Verfahrens möglich ist.

Die Erfindung betrifft ferner einen Reifen, wobei der gemäß einem erfindungsgemäßen Verfahren bearbeitet worden ist. Bei dem Reifen handelt es sich beispielsweise um einen PKW-Reifen, um einen LKW-Reifen oder um einen Zweirad-Reifen. Ein erfindungsgemäß bearbeiteter Reifen weist verbesserte Fahreigenschaften beispielsweise im Hinblick auf Aquaplaning auf, da etwaige Austriebe im Bereich des Laufstreifens zuverlässig und vollständig entfernt worden sind. Ein solcher Reifen weist zudem eine, im Vergleich zu aus dem Stand der Technik bekannten Reifen, geringere Geräuschentwicklung während eines Abrollens auf einer Fahrbahn auf. Hintergrund der geringeren Geräuschentwicklung ist der Umstand, dass Austriebe vollständig und zuverlässig entfernt worden sind; Austriebe könnten während des Abrollens des Reifens zu Geräuschen führen.

Die Erfindung betrifft ferner eine Robotervorrichtung, wobei die Robotervorrichtung zur Durchführung eines erfindungsgemäßen Verfahrens vorgesehen ist und insbesondere eine Bearbeitungsvorrichtung, eine Vermessungsvorrichtung, eine Kühlvorrichtung und/oder eine Reinigungsvorrichtung aufweist.

Weitere vorteilhafte Ausführungsformen der vorliegenden Erfindung sind Gegenstand der Unteransprüche.

Gemäß einer vorzugsweisen Ausgestaltungsform der vorliegenden Erfindung wird mittels der Vermessungsvorrichtung ein Signal erzeugt, wobei das Signal die Information über den mindestens einen Austrieb enthält, und dieses Signal mittels der Vermessungsvorrichtung an die Regelungskomponente übertragen wird und der mindestens eine Austrieb mittels der Bearbeitungsvorrichtung in Abhängigkeit der Information über den mindestens einen Austrieb entfernt wird.

Die Vermessungsvorrichtung weist insbesondere Mittel zur Erzeugung des Signals und zur Übertragung des Signals auf. Die Übertragung des Signals erfolgt insbesondere elektrisch oder elektromagnetisch, also beispielsweise über ein Kabel oder über Funk.

Die Regelungskomponente weist insbesondere ein Empfangsmittel und ein Auswertemittel zum Empfangen beziehungsweise Auswerten des Signals auf. Das Empfangsmittel der Regelungskomponente ist insbesondere zum Empfangen des Signals auf elektrische oder elektromagnetische Weise geeignet. Das Auswertemittel ist insbesondere geeignet, die Information, die mit dem Signal übertragen wird, zu verarbeiten und diese Information auszuwerten sowie für die Regelung der Bearbeitungsvorrichtung zu verwenden. Die Regelung der Bearbeitungsvorrichtung betrifft insbesondere die Betriebsparameter der Betriebsvorrichtung. Darüber hinaus kann bestimmt werden, in welchen Umfang mittels der Bearbeitungsvorrichtung auf einen Austrieb des Reifens zur Entfernung des Austriebs eingewirkt wird.

Gemäß einer nächsten vorzugsweisen Ausgestaltungsform der vorliegenden Erfindung handelt es sich bei der Information über den mindestens einen Austrieb um eine Information über einen Ort des mindestens einen Austriebs auf der Reifenoberfläche und/oder um eine Information über Abmessungen des mindestens einen Austriebs und/oder um eine Information über eine Geometrie des mindestens einen Austriebs. Der Ort des mindestens einen Austriebs kann auch als die räumliche Position des mindestens einen Austriebs auf der Reifenoberfläche bezeichnet werden.

Gemäß einer nächsten vorzugsweisen Ausgestaltungsform der vorliegenden Erfindung weist die Vermessungsvorrichtung eine Stereokamera auf, wobei die Vermessungsvorrichtung zur stereoskopischen Vermessung der Reifenoberfläche und des mindestens Austriebs vorgesehen ist und die Information über den mindestens einen Austrieb mittels der stereoskopischen Vermessung ermittelt wird.

Gemäß einer nächsten vorzugsweisen Ausgestaltungsform der vorliegenden Erfindung weist die Vermessungsvorrichtung eine Lichtschnittkomponente auf, wobei die Vermessungsvorrichtung zur Vermessung der Reifenoberfläche und des mindestens Austriebs mittels eines Lichtschnittverfahrens vorgesehen ist und die Information über den mindestens einen Austrieb mittels des Lichtschnittverfahrens ermittelt wird.

Gemäß einer nächsten vorzugsweisen Ausgestaltungsform der vorliegenden Erfindung weist die Vermessungsvorrichtung eine Streifenlichtprojektorkomponente auf, wobei die Vermessungsvorrichtung zur Vermessung der Reifenoberfläche und des mindestens Austriebs mittels eines Streifenlichtprojektionsverfahrens vorgesehen ist und die Information über den mindestens einen Austrieb mittels des Streifenlichtprojektionsverfahrens ermittelt wird. Die Streifenlichtprojektorkomponente weist einen Streifenlichtprojektor und ein aufnehmendes Element, beispielsweise eine Kamera oder einen Sensor, auf. Das aufnehmende Element dient der Erfassung und Aufnahme der mittels des Streifenlichtprojektors projizierten Lichteffekte

Gemäß einer nächsten vorzugsweisen Ausgestaltungsform der vorliegenden Erfindung weist die Vermessungsvorrichtung eine Konturvermessungskomponente auf, wobei die Vermessungsvorrichtung zur Vermessung der Reifenoberfläche und des mindestens Austriebs mittels einer Konturvermessung vorgesehen ist und die Information über den mindestens einen Austrieb mittels der Konturvermessung ermittelt wird. Insbesondere wird eine Konturvermessung der Reifenoberfläche vorgenommen, wobei tangential zu der Reifenoberfläche vermessen wird. Dabei können beispielsweise Hintergrundbilder erzeugt werden, wobei über einen Vergleich der Hintergrundbilder, etwa beispielsweise über eine Subtraktion von Hintergrundwerten und Hintergrundbildinformationen der Hintergrundbilder, Unregelmäßigkeiten der Kontur der Reifenoberfläche ermittelt werden können. Grundsätzlich folgt der Reifen einer Rotationsymmetrie.

Es können beispielsweise kontinuierlich während einer Rotation des Reifens auf einem dazu vorgesehenen Rotationsmittel die Außenkonturen des Reifens, also seine Umrisse, vor einem bekannten Hintergrund, beispielsweise einem Schirm, erfasst werden.

Unregelmäßigkeiten, die von der erwartbaren Rotationssymmetrie abweichen, können zur Bestimmung von Austrieben auf der Reifenoberfläche verwendet werden. Auf Grundlage der Unregelmäßigkeiten kann die Information über den mindestens einen Austrieb erzeugt werden und diese Information wird insbesondere auf Basis dieser Unregelmäßigkeiten erzeugt.

Gemäß einer nächsten vorzugsweisen Ausgestaltungsform der vorliegenden Erfindung wird mittels der Vermessungsvorrichtung ein dreidimensionales Abbild des Reifens und der Reifenoberfläche erzeugt. Anhand des dreidimensionalen Abbildes des Reifens und der Reifenoberfläche können die räumliche Position eines Austriebs auf der Reifenoberfläche und/oder die Abmessungen eines Austriebs auf der Reifenoberfläche oder eine geometrische Form eines Austriebs auf der Reifenoberfläche bestimmt und ermittelt werden. Dabei handelte sich insbesondere um die räumliche Position, die Abmessungen oder die geometrische Form des mindestens einen Austriebs der von der Reifenoberfläche entfernt wird oder entfernt werden soll. Auf Grundlage des dreidimensionalen Abbilds des Reifens und der Reifenoberfläche kann die Information über den mindestens einen Austrieb erzeugt werden und diese Information wird insbesondere auf Basis dieses dreidimensionalen Abbilds des Reifens und der Reifenoberfläche erzeugt.

Gemäß einer nächsten vorzugsweisen Ausgestaltungsform der vorliegenden Erfindung handelt es sich bei der Bearbeitungsvorrichtung um eine Schneidevorrichtung oder um eine thermisch wirkende Vorrichtung oder um eine Bürstenvorrichtung oder um eine Schleifvorrichtung oder um eine Laservorrichtung oder um eine Materialstrahlvorrichtung. Bei der Materialstrahlvorrichtung handelt es sich insbesondere um eine Trockeneistrahlvorrichtung, also eine Vorrichtung, mittels der ein Strahl von Trockeneis auf einen Austrieb gerichtet werden kann. Bei dem Trockeneis, dass mittels der Trockeneisstrahlvorrichtung als Strahl auf einen Austrieb gerichtet werden kann, handelt es sich beispielsweise um Trockeneispellets, vorzugsweise um Pellets aus gefrorenem Stickstoff. Bei der Materialstrahlvorrichtung handelt es sich insbesondere um eine Sandstrahlvorrichtung, also eine Vorrichtung, mittels der ein Strahl von Sand auf einen Austrieb gerichtet werden kann. Bei der Materialstrahlvorrichtung handelt es sich insbesondere um eine Glasperlenstrahlvorrichtung, also eine Vorrichtung, mittels der ein Strahl von Glasperlen auf einen Austrieb gerichtet werden kann. Bei der Materialstrahlvorrichtung handelt es sich insbesondere um eine Stahlgriesstrahlvorrichtung, also eine Vorrichtung, mittels der ein Strahl von Stahlgries auf einen Austrieb gerichtet werden kann.

Bei der Schleifvorrichtung kann es sich insbesondere um einen Druckluftschleifer oder um einen Elektroschleifer handeln. Die jeweilige Bearbeitungsvorrichtung ist zum Abtrennen oder Entfernen des einen Austriebes geeignet. Mittels der Schneidevorrichtung kann der mindestens eine Austrieb beispielsweise von dem Gummimaterial des Reifens abgeschnitten werden. Mittels der Schleifvorrichtung kann der mindestens eine Austrieb beispielsweise von dem Gummimaterial des Reifens beispielsweise abgeschliffen werden. Mittels der thermisch wirkenden Vorrichtung kann der mindestens eine Austrieb beispielsweise von dem Gummimaterial des Reifens beispielsweise weggebrannt oder weggeschmolzen werden. Mittels der Bürstenvorrichtung kann der mindestens eine Austrieb beispielsweise von dem Gummimaterial des Reifens beispielsweise weggerieben werden. Mittels der Laservorrichtung kann der mindestens eine Austrieb beispielsweise von dem Gummimaterial des Reifens beispielsweise weggebrannt oder weggeschmolzen oder weggeschnitten werden. Mittels der Materialstrahlvorrichtung kann der mindestens eine Austrieb beispielsweise von dem Gummimaterial des Reifens beispielsweise weggerieben oder weggeschnitten werden.

Gemäß einer nächsten vorzugsweisen Ausgestaltungsform der vorliegenden Erfindung weist die Laservorrichtung, für den Fall, wonach es sich bei der Bearbeitungsvorrichtung um eine Laservorrichtung handelt, Strahlführungsmittel auf. Bei den Strahlführungsmitteln handelt es sich beispielsweise um Mittel, die mittels Spiegel oder mittels eines Lichtwellenleiters die Laserstrahlen führen können. Der Einsatz von Strahlführungsmitteln ist insbesondere von Vorteil, wenn Austriebe entfernt werden sollen, die sich zwischen Profilblöcken befinden.

Für den Fall, wonach es sich bei der Bearbeitungsvorrichtung um die Laservorrichtung handelt, handelt es sich bei dem Betriebsparameter beispielsweise um die Intensität eines Lasers der Laservorrichtung oder um einen Winkel unter dem ein Laserstrahl der Laservorrichtung zu einem Normalvektor der Reifenoberfläche auf den mindestens einen Austrieb gerichtet wird. Dabei handelt es sich insbesondere um den Normalvektor des Bereichs der Reifenoberfläche an der der mindestens Austrieb sich befindet. Der Laserstrahl wird insbesondere tangential zu diesem Bereich der Reifenoberfläche, also in einem Winkel von 90° zu dem Normalvektor, auf einen direkten Übergangsbereich des mindestens einen Austriebs zu der Reifenoberfläche gerichtet. Somit ist ein unmittelbares und weitestmögliches Abtrennen des mindestens einen Austriebs von der Reifenoberfläche durchführbar.

Gemäß einer nächsten vorzugsweisen Ausgestaltungsform der vorliegenden Erfindung wird eine Kühlvorrichtung bereitgestellt und die Reifenoberfläche und/oder der mindestens eine Austrieb werden mittels der Kühlvorrichtung gekühlt, bevor der mindestens eine Austrieb mittels der Bearbeitungsvorrichtung entfernt wird. Die Reifenoberfläche und/oder der mindestens eine Austrieb werden beispielsweise in einem Verfahrensschritt auf eine Oberflächentemperatur von -30° C bis -50° C gekühlt, insbesondere mittels einer Flüssigstickstoffkühlvorrichtung, bevor der mindestens eine Austrieb mittels der Bearbeitungsvorrichtung entfernt wird.

Durch den erfindungsgemäßen Umstand, wonach die Reifenoberfläche und/oder der mindestens eine Austrieb mittels der Kühlvorrichtung gekühlt werden, bevor der mindestens eine Austrieb mittels der Bearbeitungsvorrichtung entfernt wird, kann insbesondere eine mechanische Entfernung des mindestens einen Austriebs, beispielsweise mittels einer Schneidevorrichtung, einer Bürstenvorrichtung, einer Schleifvorrichtung oder einer Materialstrahlvorrichtung energiesparender vorgenommen werden, als es ohne eine solche Kühlung der Fall wäre. Hintergrund ist, dass das Gummimaterial und insbesondere das Kautschukmaterial, aus dem der mindestens eine Austrieb ausgebildet ist, unter Einwirkung der Kühlung leichter mechanisch bearbeitet und abgetrennt werden kann.

Gemäß einer nächsten vorzugsweisen Ausgestaltungsform der vorliegenden Erfindung wird eine Reinigungsvorrichtung bereitgestellt und die Reifenoberfläche wird nach dem Entfernen des mindestens einen Austriebs mittels der Reinigungsvorrichtung gereinigt.

Gemäß einer nächsten vorzugsweisen Ausgestaltungsform der vorliegenden Erfindung handelt es sich bei der Reinigungsvorrichtung um eine Gebläsevorrichtung oder um eine Saugvorrichtung oder um eine Bürstenvorrichtung.

Weitere Merkmale, Vorteile und Einzelheiten, auf die die Erfindung in ihrem Umfang aber nicht beschränkt ist, werden nun anhand der Zeichnung näher beschrieben.

Es zeigt:

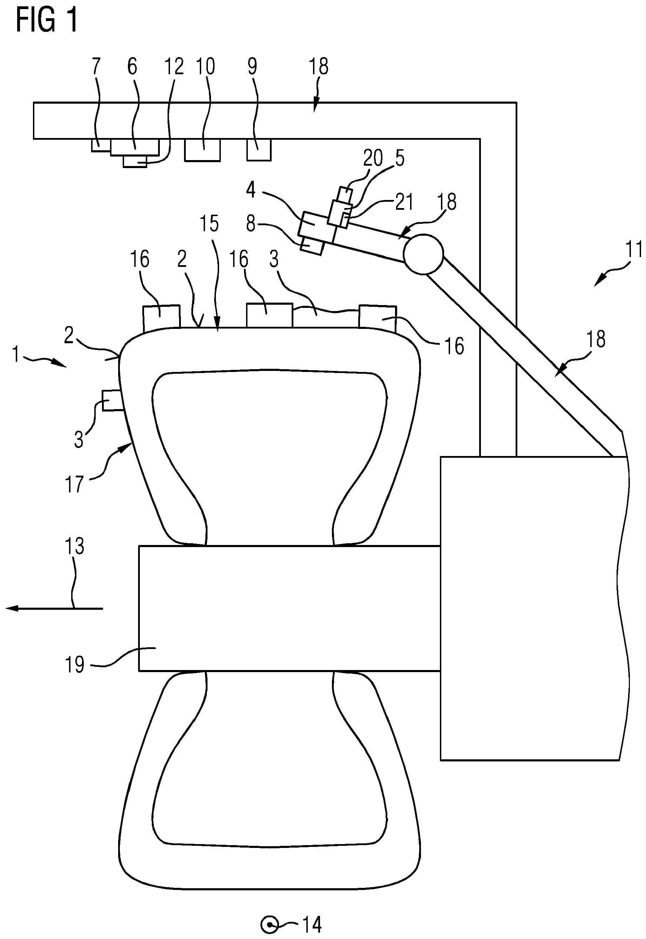

Fig. 1: Eine schematische Darstellung von Vorrichtungen zur Durchführung des erfindungsgemäßen Verfahrens, einen erfindungsgemäßen Reifen und eine erfindungsgemäße Robotervorrichtung.

In der Figur 1 sind Vorrichtungen zur Durchführung eines erfindungsgemäßen Verfahrens schematisch dargestellt. Das erfindungsgemäße Verfahren ist zur Bearbeitung eines Reifens 1 vorgesehen. Der Reifen 1 weist eine Reifenoberfläche 2 auf, wobei die Reifenoberfläche 2 mindestens einen Austrieb 3 aufweist. Gemäß der Darstellung in der Figur 1 ist der Reifen 1 in Radialschnittansicht dargestellt und um eine Rotationsachse 13 in eine Umlaufrichtung 14 rotierbar. Gemäß der Darstellung in der Figur 1 befindet sich mindestens ein erster Austrieb 3 zwischen zwei Profilblöcken 16 eines Laufstreifens 15 des Reifens 1. Mindestens ein zweiter Austrieb 3 befindet sich an einer Seitenwand 17 des Reifens 1.

Eine Bearbeitungsvorrichtung 4 ist zum Entfernen von Austrieben 3 auf der Reifenoberfläche 2 vorgesehen. Die Bearbeitungsvorrichtung 4 weist eine Regelungskomponente 5 auf, wobei mittels der Regelungskomponente 5 die Entfernung der Austriebe 3 mittels der Bearbeitungsvorrichtung 4 in Abhängigkeit einer Information über einen Austrieb 3 auf der Reifenoberfläche 2 geregelt werden kann.

Eine Vermessungsvorrichtung 6 ist zur Vermessung der Reifenoberfläche 2 vorgesehen, wobei mittels der Vermessungsvorrichtung 6 der mindestens eine Austrieb 3 vermessen wird und eine Information über den mindestens einen Austrieb 3 erzeugt wird und wobei diese Information an die Regelungskomponente 5 übertragbar ist.

Mittels der Vermessungsvorrichtung 6 wird insbesondere ein Signal erzeugt wird, wobei das Signal die Information über den mindestens einen Austrieb 3 enthält, und dieses Signal mittels der Vermessungsvorrichtung 6 an die Regelungskomponente 5 übertragen wird und der mindestens eine Austrieb 3 mittels der Bearbeitungsvorrichtung 4 in Abhängigkeit der Information über den mindestens einen Austrieb 3 entfernt wird. Die Vermessungsvorrichtung 6 weist zur Übertragung von Signalen insbesondere Mittel 7 zur Signalübertragung auf.

Die Regelungskomponente 5 weist ebenfalls Mittel 20 zur Signalübertragung auf. Die Mittel 7 und 20 sind vorzugsweise zu einem bidirektionalen Austausch von Signalen, insbesondere über Funk, vorgesehen. Die Regelungskomponente 5 ist insbesondere zu einem Auswerten der zu dem Mittel 20 übertragenen Signale und der damit transportierten Information über den mindestens einen Austrieb 3 mittels eines Auswertemittels 21 vorgesehen.

Die Vermessungsvorrichtung 6 weist insbesondere eine Vermessungskomponente 12 auf. Bei der Vermessungskomponente 12 handelt es sich beispielsweise um eine Stereokamera, eine Lichtschnittkomponente, eine Streifenlichtprojektorkomponente oder um eine Konturvermessungskomponente. Bei der Bearbeitungsvorrichtung 4 kann es sich beispielsweise um eine Laservorrichtung handeln. Die Laservorrichtung weist dann insbesondere Strahlführungsmittel 8 auf.

Mit einer Kühlvorrichtung 9 können die Reifenoberfläche 2 und/oder der mindestens eine Austrieb 3 gekühlt werden, bevor der mindestens eine Austrieb 3 mittels der Bearbeitungsvorrichtung 4 entfernt wird.

Mit einer Reinigungsvorrichtung 10 kann die Reifenoberfläche 2 nach dem Entfernen des mindestens einen Austriebs 3 gereinigt werden.

Die Bearbeitungsvorrichtung 4, die Vermessungsvorrichtung 6, die Kühlvorrichtung 9 und die Reinigungsvorrichtung 10 sind gemäß der in der Figur 1 dargestellten Ausführungsform Bestandteil einer Robotervorrichtung 11, wobei die Robotervorrichtung 11 zur Durchführung eines erfindungsgemäßen Verfahrens vorgesehen ist. Die Bearbeitungsvorrichtung 4, die Vermessungsvorrichtung 6, die Kühlvorrichtung 9 und die Reinigungsvorrichtung 10 sind gemäß der in der Figur 1 dargestellten Ausführungsform an Roboterarmen 18 der Robotervorrichtung 11 angeordnet. Der Reifen 1 ist gemäß der in der Figur 1 dargestellten Ausführungsform an einer Reifenhaltekomponente 19 der Robotervorrichtung 11 angeordnet.

### Bezugszeichenliste

### (ist Teil der Beschreibung)

- 1: Reifen
- 2: Reifenoberfläche
- 3: Austrieb
- 4: Bearbeitungsvorrichtung
- 5: Regelungskomponente
- 6: Vermessungsvorrichtung
- 7: Mittel zur Signalübertragung
- 8: Strahlführungsmittel
- 9: Kühlvorrichtung
- 10: Reinigiungsvorrichtung
- 11: Robotervorrichtung
- 12: Vermessungskomponente
- 13: Rotationsachse
- 14: Umlaufrichtung
- 15: Laufstreifen
- 16: Profilblöcken
- 17: Seitenwand
- 18: Roboterarme
- 19: Reifenhaltekomponente
- 20: Mittel zur Signalübertragung
- 21: Auswertemittel

## Patentansprüche

1. Verfahren zur Bearbeitung eines Reifens (1), aufweisend die folgenden Schritte:
- Bereitstellen eines Reifens (1), wobei der Reifen (1) eine Reifenoberfläche (2) aufweist, wobei die Reifenoberfläche (2) mindestens einen Austrieb (3) aufweist;
- Bereitstellen einer Bearbeitungsvorrichtung (4), wobei die Bearbeitungsvorrichtung (4) zum Entfernen von Austrieben (3) auf der Reifenoberfläche (2) vorgesehen ist;
- Bereitstellen einer Vermessungsvorrichtung (6), wobei die Vermessungsvorrichtung (6) zur Vermessung der Reifenoberfläche (2) vorgesehen ist;
- Vermessen der Reifenoberfläche (2) mittels der Vermessungsvorrichtung (6), wobei mittels der Vermessungsvorrichtung (3) der mindestens eine Austrieb (3) vermessen wird und eine Information über den mindestens einen Austrieb (3) erzeugt wird und wobei diese Information an die Regelungskomponente (5) übertragbar ist;
- **dadurch gekennzeichnet, dass** die Bearbeitungsvorrichtung (4) eine Regelungskomponente (5) aufweist, wobei mittels der Regelungskomponente (5) die Entfernung der Austriebe (3) mittels der Bearbeitungsvorrichtung (4) in Abhängigkeit einer Information über einen Austrieb (3) auf der Reifenoberfläche (2) geregelt werden kann.

2. Verfahren nach Anspruch 1, **dadurch gekennzeichnet, dass** mittels der Vermessungsvorrichtung (6) ein Signal erzeugt wird, wobei das Signal die Information über den mindestens einen Austrieb (3) enthält, und dieses Signal mittels der Vermessungsvorrichtung (6) an die Regelungskomponente (5) übertragen wird und der mindestens eine Austrieb (3) mittels der Bearbeitungsvorrichtung (4) in Abhängigkeit der Information über den mindestens einen Austrieb (3) entfernt wird.

3. Verfahren nach Anspruch 1, **dadurch gekennzeichnet, dass** es sich bei der Information über den mindestens einen Austrieb (3) um eine Information über einen Ort des mindestens einen Austriebs (3) auf der Reifenoberfläche (2) und/oder um eine Information über Abmessungen des mindestens einen Austriebs (3) und/oder um eine Information über eine Geometrie des mindestens einen Austriebs (3) handelt.

4. Verfahren nach einem der vorhergehenden Ansprüche, **dadurch gekennzeichnet, dass** die Vermessungsvorrichtung (6) eine Stereokamera (12) aufweist, wobei die Vermessungsvorrichtung (6) zur stereoskopischen Vermessung der Reifenoberfläche (2) und des mindestens Austriebs (3) vorgesehen ist und die Information über den mindestens einen Austrieb (3) mittels der stereoskopischen Vermessung ermittelt wird oder, dass die Vermessungsvorrichtung (6) eine Lichtschnittkomponente (12) aufweist, wobei die Vermessungsvorrichtung (6) zur Vermessung der Reifenoberfläche (2) und des mindestens Austriebs (3) mittels eines Lichtschnittverfahrens vorgesehen ist und die Information über den mindestens einen Austrieb (3) mittels des Lichtschnittverfahrens ermittelt wird oder, dass die Vermessungsvorrichtung (6) eine Streifenlichtprojektorkomponente (12) aufweist, wobei die Vermessungsvorrichtung (6) zur Vermessung der Reifenoberfläche (2) und des mindestens Austriebs (3) mittels eines Streifenlichtprojektionsverfahrens vorgesehen ist und die Information über den mindestens einen Austrieb (3) mittels des Streifenlichtprojektionsverfahrens ermittelt wird oder, dass die Vermessungsvorrichtung (6) eine Konturvermessungskomponente (12) aufweist, wobei die Vermessungsvorrichtung (6) zur Vermessung der Reifenoberfläche (2) und des mindestens Austriebs (3) mittels einer Konturvermessung vorgesehen ist und die Information über den mindestens einen Austrieb (3) mittels der Konturvermessung ermittelt wird.

5. Verfahren nach einem der vorhergehenden Ansprüche, **dadurch gekennzeichnet, dass** es sich bei der Bearbeitungsvorrichtung (4) um eine Schneidevorrichtung oder um eine thermisch wirkende Vorrichtung oder um eine Bürstenvorrichtung oder um eine Schleifvorrichtung oder um eine Laservorrichtung, oder um eine Materialstrahlvorrichtung handelt.

6. Verfahren nach dem vorhergehenden Anspruch, **dadurch gekennzeichnet, dass** es sich für den Fall, wonach es bei der Bearbeitungsvorrichtung (4) um einen Laservorrichtung handelt, die Laservorrichtung Strahlführungsmittel (8) aufweist.

7. Verfahren nach einem der vorhergehenden Ansprüche, **dadurch gekennzeichnet, dass** eine Kühlvorrichtung (9) bereitgestellt wird und die Reifenoberfläche (2) und/oder der mindestens eine Austrieb (3) mittels der Kühlvorrichtung (9) gekühlt werden, bevor der mindestens eine Austrieb (3) mittels der Bearbeitungsvorrichtung (4) entfernt wird.

8. Verfahren nach einem der vorhergehenden Ansprüche, **dadurch gekennzeichnet, dass** eine Reinigungsvorrichtung (10) bereitgestellt wird und die Reifenoberfläche (2) nach dem Entfernen des mindestens einen Austriebs (3) mittels der Reinigungsvorrichtung (10) gereinigt wird.

9. Verfahren nach dem vorhergehenden Anspruch, **dadurch gekennzeichnet, dass** es sich bei der Reinigungsvorrichtung (10) um eine Gebläsevorrichtung oder um eine Saugvorrichtung oder um eine Bürstenvorrichtung handelt.

10. Robotervorrichtung (11), wobei die Robotervorrichtung (11) zur Durchführung eines Verfahrens nach einem der Ansprüche 1 bis 9 vorgesehen ist und eine Bearbeitungsvorrichtung (4)aufweist, wobei die Bearbeitungsvorrichtung (4) eine Regelungskomponente (5) aufweist, wobei mittels der Regelungskomponente (5) die Entfernung der Austriebe (3) mittels der Bearbeitungsvorrichtung (4) in Abhängigkeit einer Information über einen Austrieb (3) auf der Reifenoberfläche (2) geregelt werden kann, und/oder insbesondere eine Vermessungsvorrichtung (6), eine Kühlvorrichtung (9) und/oder eine Reinigungsvorrichtung (10) aufweist.

## Claims

1. Method for processing a tyre (1), having the following steps:
- providing a tyre (1), wherein the tyre (1) has a tyre surface (2), wherein the tyre surface (2) has at least one occurrence of flash (3);
- providing a processing device (4), wherein the processing device (4) is intended for removing occurrences of flash (3) on the tyre surface (2),
- providing a measuring device (6), wherein the measuring device (6) is intended for measuring the tyre surface (2);
- measuring the tyre surface (2) by means of the measuring device (6), wherein the at least one occurrence of flash (3) is measured by means of the measuring device (3) and an item of information relating to the at least one occurrence of flash (3) is generated and wherein this item of information can be transmitted to the closed-loop control component (5);
- **characterized in that** the processing device (4) has a closed-loop control component (5), wherein, by means of the closed-loop control component (5), the removal of the occurrences of flash (3) by means of the processing device (4) can be controlled on a closed-loop basis in a manner dependent on an item of information relating to an occurrence of flash (3) on the tyre surface (2).

2. Method according to Claim 1, **characterized in that**, by means of the measuring device (6) a signal is generated, wherein the signal contains the item of information relating to the at least one occurrence of flash (3), and the signal is transmitted by means of the measuring device (6) to the closed-loop control component (5) and the at least one occurrence of flash (3) is removed by means of the processing device (4) in a manner dependent on the item of information relating to the at least one occurrence of flash (3).

3. Method according to Claim 1, **characterized in that** the item of information relating to the at least one occurrence of flash (3) is an item of information relating to a location of the at least one occurrence of flash (3) on the tyre surface (2) and/or an item of information relating to dimensions of the at least one occurrence of flash (3) and/or an item of information relating to a geometry of the at least one occurrence of flash (3).

4. Method according to one of the preceding claims, **characterized in that** the measuring device (6) has a stereo camera (12), wherein the measuring device (6) is intended for the stereoscopic measurement of the tyre surface (2) and the at least one occurrence of flash (3) and the item of information relating to the at least one occurrence of flash (3) is determined by means of the stereoscopic measurement or **in that** the measuring device (6) has a light-section component (12), wherein the measuring device (6) is intended for measuring the tyre surface (2) and the at least one occurrence of flash (3) by means of a light-section method and the item of information relating to the at least one occurrence of flash (3) is determined by means of the light-section method or **in that** the measuring device (6) has a structured-light projection component (12), wherein the measuring device (6) is intended for measuring the tyre surface (2) and the at least one occurrence of flash (3) by means of a structured-light projection method and the item of information relating to the at least one occurrence of flash (3) is determined by means of the structured-light projection method or **in that** the measuring device (6) has a contour measuring component (12), wherein the measuring device (6) is intended for measuring the tyre surface (2) and the at least one occurrence of flash (3) by means of a contour measurement and the item of information relating to the at least one occurrence of flash (3) is determined by means of the contour measurement.

5. Method according to one of the preceding claims, **characterized in that** the processing device (4) is a cutting device or a thermally acting device or a brush device or a grinding device or a laser device, or a material blasting device.

6. Method according to the preceding claim, **characterized in that**, in the case where the processing device (4) is a laser device, the laser device has beam guiding means (8).

7. Method according to one of the preceding claims, **characterized in that** a cooling device (9) is provided and the tyre surface (2) and/or the at least one occurrence of flash (3) are cooled by means of the cooling device (9) before the at least one occurrence of flash (3) is removed by means of the processing device (4).

8. Method according to one of the preceding claims, **characterized in that** a cleaning device (10) is provided and the tyre surface (2) is cleaned by means of the cleaning device (10) after the removal of the at least one occurrence of flash (3).

9. Method according to the preceding claim, **characterized in that** the cleaning device (10) is a blower device or a suction device or a brush device.

10. Robot device (11), wherein the robot device (11) is intended for carrying out a method according to one of Claims 1 to 9 and has a processing device (4), wherein the processing device (4) has a closed-loop control component (5), wherein, by means of the closed-loop control component (5), the removal of the occurrences of flash (3) by means of the processing device (4) can be controlled on a closed-loop basis in a manner dependent on an item of information relating to an occurrence of flash (3) on the tyre surface (2), and/or in particular has a measuring device (6), a cooling device (9) and/or a cleaning device (10).

## Revendications

1. Procédé permettant d'usiner un pneu (1), présentant les étapes suivantes consistant à :
- fournir un pneu (1), dans lequel le pneu (1) présente une surface de pneu (2), la surface de pneu (2) présentant au moins une bavure latérale (3) ;
- fournir un dispositif d'usinage (4), dans lequel le dispositif d'usinage (4) est prévu pour retirer des bavures latérales (3) sur la surface de pneu (2) ;
- fournir un dispositif de mesure (6), dans lequel le dispositif de mesure (6) est prévu pour mesurer la surface de pneu (2) ;
- mesurer la surface de pneu (2) au moyen du dispositif de mesure (6), dans lequel le dispositif de mesure (3) permet de mesurer ladite au moins une bavure latérale (3) et de générer une information concernant ladite au moins une bavure latérale (3), et dans lequel cette information peut être transmise au composant de régulation (5) ;
- **caractérisé en ce que** le dispositif d'usinage (4) présente un composant de régulation (5), dans lequel le composant de régulation (5) permet de réguler la distance des bavures latérales (3) au moyen du dispositif d'usinage (4) en fonction d'une information concernant une bavure latérale (3) sur la surface de pneu (2).

2. Procédé selon la revendication 1, **caractérisé en ce que** le dispositif de mesure (6) permet de générer un signal, dans lequel le signal contient l'information concernant ladite au moins une bavure latérale (3), et ledit signal est transmis au dispositif de régulation (5) au moyen du dispositif de mesure (6), et ladite au moins une bavure latérale (3) est retirée au moyen du dispositif d'usinage (4) en fonction de l'information concernant ladite au moins une bavure latérale (3).

3. Procédé selon la revendication 1, **caractérisé en ce que** l'information concernant ladite au moins une bavure latérale (3) est une information concernant un emplacement de ladite au moins une bavure latérale (3) sur la surface de pneu (2) et/ou une information concernant les dimensions de ladite au moins une bavure latérale (3) et/ou une information concernant une géométrie de ladite au moins une bavure latérale (3).

4. Procédé selon l'une quelconque des revendications précédentes, **caractérisé en ce que** le dispositif de mesure (6) présente une caméra stéréo (12), dans lequel le dispositif de mesure (6) est prévu pour la mesure stéréoscopique de la surface de pneu (2) et de ladite au moins une bavure latérale (3), et l'information concernant ladite au moins une bavure latérale (3) est établie au moyen de la mesure stéréoscopique, ou **en ce que** le dispositif de mesure (6) présente un composant de coupe optique (12), dans lequel le dispositif de mesure (6) est prévu pour mesurer la surface de pneu (2) et ladite au moins une bavure latérale (3) au moyen d'un procédé de coupe optique, et l'information concernant ladite au moins une bavure latérale (3) est établie au moyen du procédé de coupe optique, ou **en ce que** le dispositif de mesure (6) présente un composant de projecteur de lumière en bande (12), dans lequel le dispositif de mesure (6) est prévu pour mesurer la surface de pneu (2) et ladite au moins une bavure latérale (3) au moyen d'un procédé de projection de lumière en bande, et l'information concernant ladite au moins une bavure latérale (3) est établie au moyen du procédé de projection de lumière en bande, ou **en ce que** le dispositif de mesure (6) présente un composant de mesure de contour (12), dans lequel le dispositif de mesure (6) est prévu pour mesurer la surface de pneu (2) et ladite au moins une bavure latérale (3) au moyen d'une mesure de contour, et l'information concernant ladite au moins une bavure latérale (3) est établie au moyen de la mesure de contour.

5. Procédé selon l'une quelconque des revendications précédentes, **caractérisé en ce que** le dispositif d'usinage (4) est un dispositif de coupe ou un dispositif à effet thermique ou un dispositif à brosses ou un dispositif de rectification ou un dispositif laser ou un dispositif à jet de matière.

6. Procédé selon la revendication précédente, **caractérisé en ce que**, dans le cas où le dispositif d'usinage (4) est un dispositif laser, ledit dispositif laser présente des moyens de guidage de faisceau (8).

7. Procédé selon l'une quelconque des revendications précédentes, **caractérisé en ce qu'**un dispositif de refroidissement (9) est fourni, et la surface de pneu (2) et/ou ladite au moins une bavure latérale (3) sont refroidies au moyen du dispositif de refroidissement (9) avant que ladite au moins une bavure latérale (3) ne soit retirée au moyen du dispositif d'usinage (4).

8. Procédé selon l'une quelconque des revendications précédentes, **caractérisé en ce qu'**un dispositif de nettoyage (10) est fourni, et la surface de pneu (2) est nettoyée au moyen du dispositif de nettoyage (10) après le retrait de ladite au moins une bavure latérale (3).

9. Procédé selon la revendication précédente, **caractérisé en ce que** le dispositif de nettoyage (10) est un dispositif à soufflante ou un dispositif d'aspiration ou un dispositif à brosses.

10. Dispositif robotisé (11), dans lequel le dispositif robotisé (11) est prévu pour exécuter un procédé selon l'une quelconque des revendications 1 à 9 et présente un dispositif d'usinage (4), dans lequel le dispositif d'usinage (4) présente un composant de régulation (5), dans lequel le composant de régulation (5) permet de réguler la distance des bavures latérales (3) au moyen du dispositif d'usinage (4) en fonction d'une information concernant une bavure latérale (3) sur la surface de pneu (2), et/ou en particulier un dispositif de mesure (6), un dispositif de refroidissement (9) et/ou un dispositif de nettoyage (10).
